# EUROPEAN PATENT SPECIFICATION

(11) **EP 3 150 355 B1**
(45) Date of publication and mention of the grant of the patent: **29.12.2021**
(21) Application number: 15194908.8
(22) Date of filing: 17.11.2015
(51) Int. Cl.: B29C 48/04, B29C 43/30, B29C 48/08, B29C 48/34, B29C 43/32, B29C 43/36

(54) **CAP PRESS MOLDING EQUIPMENT AND USE THEREOF**
KAPPENDRUCKFORMVORRICHTUNG UND VERWENDUNG
ÉQUIPEMENT DE MOULAGE PAR PRESSAGE DE CAPUCHONS ET UTILISATION

(30) Priority: 30.09.2015 CN 201510636350
(43) Date of publication of application: 05.04.2017
(73) Proprietor: Dong Guan Jin Fu Industry Co., Ltd, Guangdong Province (CN)
(72) Inventor: CHEN, Jinpei, Dongguan City (CN)
(74) Representative: Office Kirkpatrick

(56) References cited:
- EP-A1- 2 206 592
- WO-A2-2009/083855
- CN-A- 101 920 542
- CN-A- 102 837 412
- CN-A- 102 862 296
- JP-A- 2003 127 211
- US-A- 3 996 090
- None

## Description

### TECHNICAL FIELD

The present invention relates to the field of press molding technology equipment, in particular to a symphony cap press molding equipment.

### Background technique

Due to the massive use of plastic products, in the long future, it will still be an important part in the production and our life. As the plastic container is cheap, easy to shape and easy to use, it is widely used in various containers, especially the bottled containers, such as: mineral water bottles and drink bottles, whose structure is mainly consists of the bottle body and the cap. At present, the bottles body is mainly blow molding, the cap is injection molding or press molding, but now the cap produced by these injection molding or press molding equipment are monochromatic, as disclosed for example in EP2206591. JP2003127211 discloses a device for molding preforms for use in blow molding bottles, using a multi screw extruder to avoid thermal degradation of resin during plasticization. Although the double-color injection molding process exists, but the process is monochrome forming of the product, and then forming a second color inside or outside, which means these two different colors are formed one after another. It is clear that this two-color injection molding process can provide colored caps, but this two-color cap has the same design, one color inside, and the other one outside. Every cap is uniform and constant, you can't have symphony cap of various color or various designed colorful. Furthermore, since the temperatures of the two molding materials differ a lot, they can't joint so well, the rate of failure is high, so the inventor invented a new symphony cap press molding equipment after repeated experiments and demonstration.

### SUMMARY OF THE INVENTION

In view of the existing technologies in sufficiency, the present invention provides a symphony cap press molding equipment, which can produce colorful plastic caps of random position color, and has the advantage of simplified process, highly automatic and easily molding.

The purpose of the present invention is realized by the equipment and its use for producing bottle caps with a distribution of different colors as defined in the claims. A cap press molding equipment is showed, which includes a machine base. The machine base is provided with a pressing rotating device, a feeding device, a rotating scraper device, and at least two extrusion screw mechanisms. The said two extrusion screw mechanisms extrude different colors of molten plastic extrusion to the feeding device, the rotary scraper device scrapes the extruded molten plastic of the feeding device, and then feeds to the pressing rotating device to press, the machine base is also provided with an unloading mechanism, which is used to discharge the molded article. The feeding device comprises a confluence passage to accept the two molten plastics and a supply passage communicating with the confluence passage, the confluent passage includes a main channel, a first channel and a second channel. The first channel and the second channel are independently receiving the molten plastic of the extrusion screw mechanism. The first channel and second channel are V shaped distribution, the first channel and the second channel are merged into the main channel, and the main channel is communicating with the supply channel, the output of the feed supply passage is provided with a spray nozzle.

Further, the pressing rotating device comprises a turntable base, a driving shaft which is disposed on the turntable base, the driving shaft is provided with the upper turntable and lower turntable, the upper turntable is provided with a plurality of first telescoping mechanism, the telescoping mechanism is provided with a male die, the lower turntable is provided with a second telescoping mechanism which is corresponding to the first telescoping mechanism, the second telescoping mechanism is provided with a female die, the turntable is also provided with a servo motor which is connecting with the driving shaft.

Further, the male die comprises a mold, which is fitted with a movable up and down block, the block moves up and down driving by the first telescopic mechanism.

Further, the extrusion screw mechanism includes a cartridge, a hopper which feeds material to the cartridge, and a screw which is set within the cartridge. A gear box is arranged in one end of the cartridge, and this gear box is used to drive the screw, the gear box is connected to a second servo motor, the cartridge is emitted from the other end side.

Further, the said extruder screw mechanism is provided with three, there is a third channel between the first channel and second channel. The molten plastic of the first channel, the second channel and the third channel converge into the main channel.

Further, the rotating scraper means comprises a first turntable and several blade means which are arrange on the turntable, and a third servo motor to drive the first turntable.

Preferably, the blade means includes a base and a blade mounts on the base, both sides of the blade are provided with a fixed plate, the base is provided with a rod which is used to push out the plastic blank and a driving cylinder.

Further, the unloading mechanism includes a curved channel, concave-convex wheels that extend into the curved channel, and a driving mechanism for driving concave-convex wheels. The edge of the curved channel is provided with a stop bar, the output of the stop bar is provided with a belt.

Further, the rotating scraper device is provided with a first pulley, the unloading mechanism is provided with a second pulley, and the first pulley and the second pulley are drivingly connected.

The cap press molding equipment has such advantages: First, at the time of molding, the equipment directly use two or more melt extrusion screw mechanisms to melt plastics of different colors, and then converge them to a symphony blank. After the press of the pressing rotating device, a cap with a distribution of different colors can be extruded. It greatly simplifies the existing color cap production processes; Second, this equipment is highly automatic, without human intervention and can improve the production efficiency, thus reduces costs; Third, by the use of two or more extrusion screw mechanism at the same time, the different colors of molten material can achieve better fusion bonding. Also, the symphony melt fuse is formed by extrusion molding at one time, which is molding easier and improves the qualified product rate; Fourth, the products produced by this equipment can achieve random variation of the color positions, indicating that every product have different color width, size and position, giving the product a personalized expression, to meet the different needs of different products.

### BRIEF DESCRIPTION OF THE DRAWING

Reference may now be made to the drawings, it is also understood that the following drawing shall be interpreted as illustrative and not in a limiting sense, for those who are skilled in the art upon reading and understanding; he can also get other figures of the following drawings without creative work.
Figure. 1 illustrates a perspective view of embodiment one of the invention.
Figure.2 illustrates a schematic structural diagram of the embodiment one of the press rotating device embodiment.
Figure.3 is a schematic of an exemplary male die of loading state of the embodiment one.
Figure.4 is a schematic diagram of the structure of the feeding device.
Figure.5 is a schematic diagram of the structure of the converge channel of feeding device of embodiment one.
Figure.6 is a schematic diagram of the structure of a rotary scraper means of embodiment one.
Figure.7 is a schematic diagram of the structure of the blade means of embodiment one.
Figure.8 is a schematic diagram of a configuration of the extrusion screw device of embodiment one.
Figure.9 is a schematic diagram of the structure of the discharge device of embodiment one.
Figure. 10 is a schematic diagram of the structure of the driving device of embodiment one.
Figure. 11 is a schematic diagram of the upper turntable, lower turntable and the conlave concave-convex wheel of embodiment one.
Figure. 12 is a schematic structural diagram of converge channel of embodiment two.

Numeral marks include:
machine base --1, press rotating device --2 turntable base --21,
driving shaft--22, upper turntable --23, lower turntable --24,
first telescopic mechanism --25, the cam --26, the mold --261,
block--262, the second telescopic mechanism --27, female die--28,
male die--29, the first servo motor--29, feeding device --3, the confluence channel --31,
first channel--311, the second channel --312, the main channel --313,
the third channel--314, supply passage --32, spray nozzle --33,
rotating scraper device --4, the first turntable --41, the blade means --42,
base --421, blade--422, fixed plate --423,
rod --424, cylinder --425,the third servomotor --43,
first pulley--44, two extrusion screw mechanisms --5, cartridge --51,
hopper--52, screw --53, gear box--54,
the second servo motor--55, unloading mechanism --6, curved channels --61,
concave-convex wheel--62, driving mechanism --63, stop bar--64,
the second pulley--65.

### DETAILED DESCRIPTION

The detail of invention is described blow with the drawings.

### Embodiment 1:

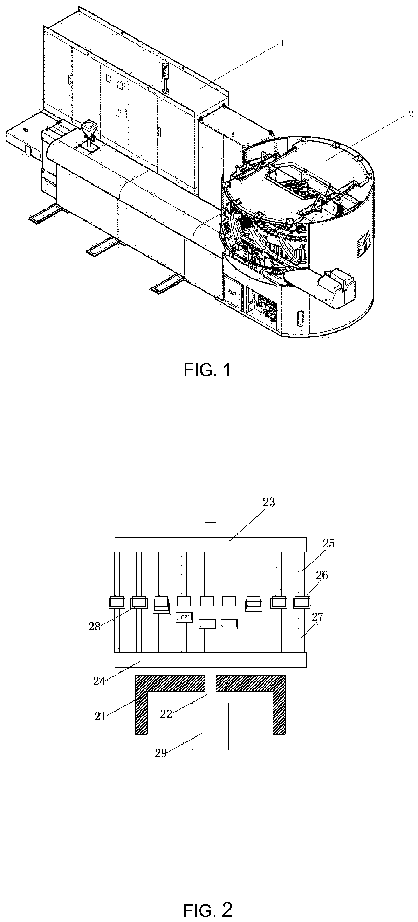

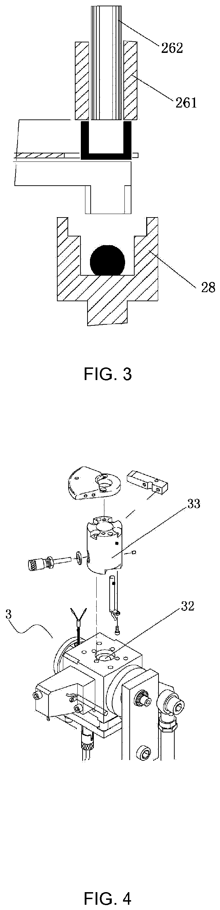

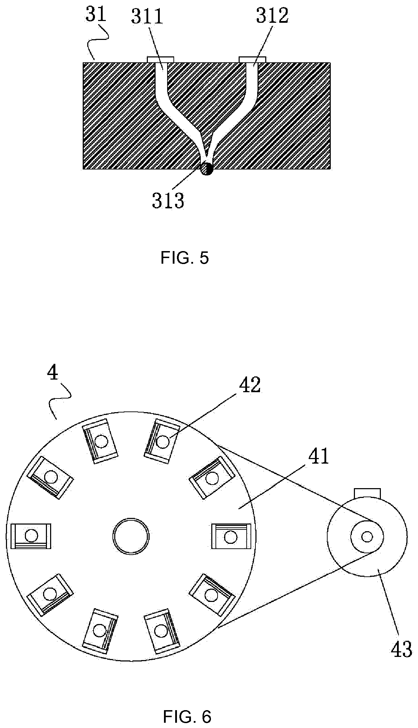

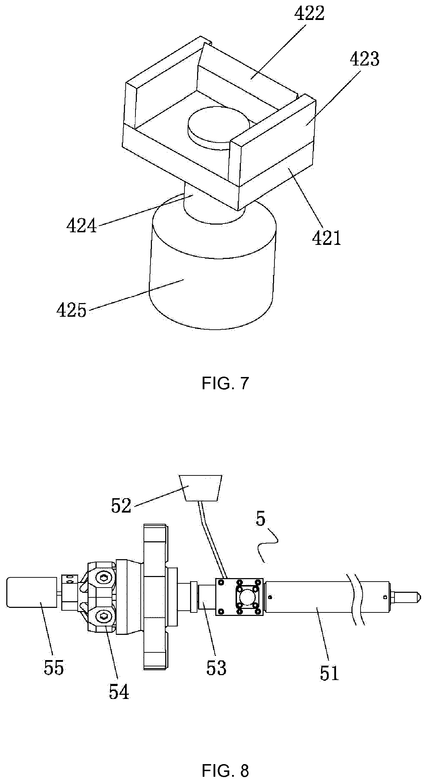

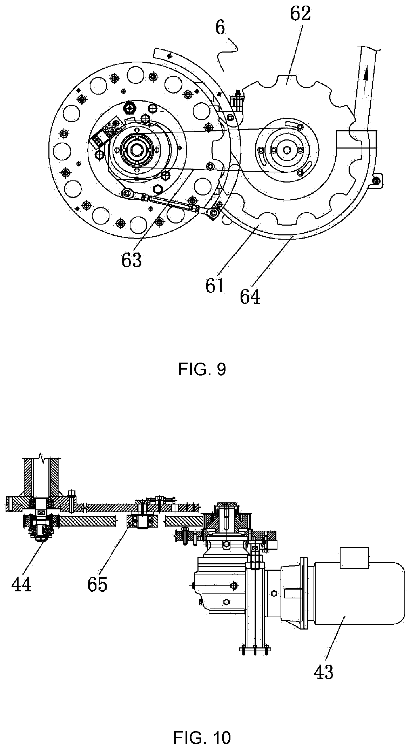

In the Figs. 1 to 11, a symphony cap press molding equipment is showed which includes machine base 1. The machine base 1 is provided with a pressing rotating device 2, feeding device 3, rotating scraper device 4, and at least two extrusion screw mechanisms 5. The said two extrusion screw mechanisms 5 extrude different colors of molten plastic extrusion to the feeding device 3, the rotary scraper device 4 scrapes the extruded molten plastic of the feeding device, and then feeds to the pressing rotating device 2 to press, the machine base 1 also provided with an unloading mechanism 6, which is to discharge the molded article. The working principle of this device is as followed: set an example of the blue-white symphony cap, the blue plastic and the white plastic are separately molten by one of the extrusion screw mechanisms 5, then this two-colored molten plastic is extruded to the feeding device 3 to merge, so a double-colored molten blank with blue and white is done, which has a continuous color, then the molten blank continues to output, the rotary scraper device 4 scrapes it and instantly feeds to rotating pressing device 2 to press, then a blue-white cap is done. When the rotating scraper means 4 feeds the double-colored molten blank to the rotating pressing device 2, every blank's deformation, position, velocity, extrusion pressure, the contact surface of the mold etc. are all different, each molded article, the position or size of each color distribution etc. are different. Thereby caps of different color distributions can be obtained. Further to notify: two extrusion screw mechanisms 5 are adopted in the technical solution, apparently, according to the needs of different colors, you can also increase the number of extrusion screw mechanisms 5.

In summary, the cap press molding equipment has such advantages. First, at the time of molding, the equipment directly uses two or more melt extrusion screw mechanisms 5 to melt plastics of different colors, and then converges them to a symphony blank, after the press of pressing rotating device 2, a cap with different color distribution can be extruded. It greatly simplifies the existing color cap production processes. Second, this equipment is highly automatic, without human intervention and can improve the production efficiency, thus reduces costs; Third, by the use of two or more extrusion screw mechanisms at the same time, the different colors of molten material can achieve better fusion bonding. Also, the symphony melt fuse is formed by extrusion molding at one time, which is molding easier and improves the qualified product rate; Fourth, the products produced by this equipment can achieve random variation of the color positions, indicating that every product have different color width, size and position, giving the product a personalized expression, to meet the different needs of different products. With respect to the use of screen printing of individual treatment, this equipment is conducive to large-scale production and manufacturing, which makes a big cost saving.

In this embodiment, the pressing rotating device 2 comprises a turntable base 21, a driving shaft 22 which is disposed on the turntable base 21. The driving shaft 22 is provided with a upper turntable 23 and a lower turntable 24. The upper turntable 23 is provided with a first telescoping mechanism 25. The first telescoping mechanism 25 is provided with a male die. The lower turntable 24 is provided with a second telescoping mechanism 27, which is corresponding to the first telescoping mechanism 25. The second telescoping mechanism 27 is provided with a female die 28. The turntable 21 is also provided with a servo motor 29, which is connected with the driving shaft 22. When the female die 28 and the male die 29 complete the pressing, by the second telescoping mechanism 27, the female die 28 moves downward, the rotary scraper device 4 will turn the blank into a different female die 28 one by one. When the blank goes into the female die 28, the telescoping mechanism 27 drives the second female die 28 to move upward again, so that the corresponding female die and male die assembles, then the extrusion of the blank is done.

Further, the male die comprises a mold 261, the mold 261 is fitted with a movable up and down block 262. The block 262 moves up and down by the first telescopic mechanism 25. When the female die 28 moves downward, the product (cap) is located on the male die. At this time, the male die is in the unloading station, the first telescoping mechanism 25 drives the block 262 down to forcibly eject the product, thus the product is unloaded. The first telescoping mechanism 25 and the second telescoping mechanism 27 can be driven by an oil cylinder or pneumatically, which is not limited.

In this embodiment, the extrusion screw mechanism 5 includes a cartridge 51, a hopper 52 which feeds material to the cartridge 51, and a screw 53 which is set within the cartridge 51. A gear box 54 is set at one end of the cartridge 51, and this gear box 54 is used to drive the screw 53. The gear box 54 is connected to the second servo motor 55. The cartridge 51 emits from the other end side. Particles in the hopper 52 go into the cartridge 51; the cartridge 51 is coated around with heating elements to heat the particles into a molten state. The gearbox 54 is driven by the second servo motor 55, then the screw 53 extrudes the plastic material and enhance the internal pressure of it, so it can exit from the emitted end at a high speed, thus achieves confluent in the feeding device 3. The present extrusion screw mechanism 5 is simple in structure with high injection pressure, thus ensuring a high-speed convergence of the fed molten plastic in the feeding device 3.

In this embodiment, the feeding device 3 comprises a confluence passage 31 to accept the two molten plastic and a supply passage 32, which is connected with the confluence passage 31. The confluent passage 31 consists of a main channel 313, a first channel 311 and a second channel 312 which independently receives the molten plastic from the extrusion screw mechanism 5. The first channel 311 and second channel 312 is V shaped distribution, the first channel 311 and the second channel 312 is merged into the main channel 313, and the main channel 313 is communicating with the supply channel 32, the output of the feed supply passage 32 is provided with a spray nozzle 33. When the two extrusion screw mechanisms 5 melt the plastic raw materials and exit from the emit end at high-speed, the two molten plastics respectively go into the first channel 311 and the second channel 312. Since the first channel 311 and second channel 312 is V shaped the molten plastic of the first channel 311 and second channel 312 merge into the main channel 313. If the two plastics' colors are different, a double-color blank can be formed. This blank from the supply passage 32 goes into the spray nozzle 33 to be ejected. By the rotating scraper device 4, the blank is scraped into segments, and fed into the female die 28. This feeding device 3 has a simple structure, by clever use of two channels and the main channel 313, the synthesis of two colors blank is achieved, thus ensuring the symphony cap molding.

Typically, the weight of each product is strictly controlled, one purpose is to ensure the weight of the product, and the second is to ensure the maximum materials saving according to appropriate standard. Obviously, for caps products, its weight control is particularly important. In order to achieve a more accurate weight control, the output of the feed passage 32 is provided with a metering pump which is used to weight the feeding material, so as to achieve accurate control article weight.

In this embodiment, the rotating scraper means 4 comprises a first turntable 41 and several blade means 42 which is set on the turntable 41, and a third servo motor 43 to drive the first turntable. Since the male die and the female die 28 are rotating in a cycle, in order to achieve the scraper operation constantly, the second servo motor 55 drives the first rotating turntable 41. The blade means mounted on the first turntable 41 sequentially scrapes the material from the spray nozzle 33, then the first turntable 41 to convey the blank to the female die 28.

Specifically, the blade means 42 includes a base 421 and a blade 422 mounted on the base 421, both sides of the blade 422 are provided with a fixed plates 523. The base 421 is provided with a rod 424 which is used to push out the plastic blank and a driving cylinder 425. When the blade 422 scrape the blank material from the discharge nozzle 33, since the first turntable 41 is rotating at a highly speed, the centrifugal force is large, but the fixed plate 523 can effectively prevent from flying out under the action of centrifugal force. When the first wheel 41 rotates to the material loading position, in the drive of cylinder 425, the rod 424 pushes out the material down into the female die 28 so as to achieve the charging operation of female die 28. This scraper means 42 have simple structure, and meanwhile stable and reliable.

Since the press molding equipment is highly speeded, when it works, it can complete 1200-2000 blank / min, it must be so quick in the unloading operation. The unloading mechanism 6 includes an curved channel 61 and a concave-convex wheel 62 that extends into the curved channel 61, and a drive mechanism 63 for driving concave-convex wheel 62. The edges of the curved channel 61 are provided with a stop bar 64, the output of the stop bar 64 is provided with a belt. When the male die is rotated to the discharge position, the cap is discharged to a concave-convex wheel 62. By the drive mechanism 63 the concave-convex wheel 62 rotates, it will in turn remove the cap and then turn to the curved channel 61 to discharge onto a conveyor. This discharge mechanism 6 has high efficiency and accurate transmission.

Since the high-speed production of this equipment, the rotating scraper device 4 and the pressing rotating device 2 must be synchronized, and the unloading device and the rotating scraper device 4 must also be synchronized. So in this scenario, the rotating scraper device 4 is provided with a first pulley 44, the unloading mechanism 6 is provided with a second pulley 65, the first pulley 44 and the second pulley 65 are drivingly connected. That means while the rotating scraper device 4 works, it uses a belt to link the first pulley 44 and the second pulley 65, so that when the rotating scraper device 4 started to work, the concave-convex wheel 62 also starts to rotate. It can not only save to install a motor specifically for the discharge mechanism, but also easy to control.

### Embodiment 2:

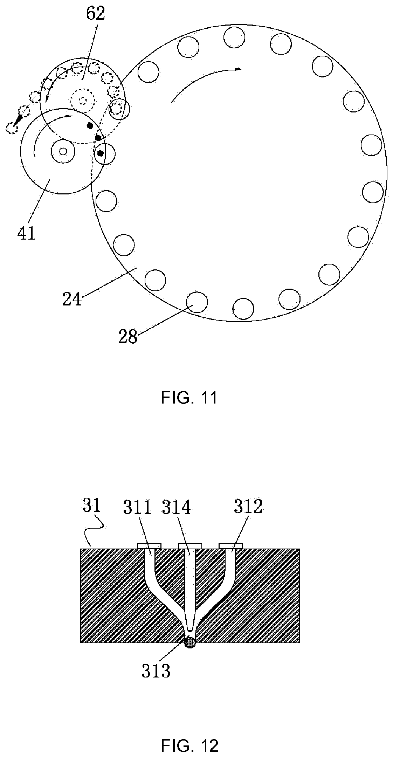

In the Fig.12, this embodiment differs from the embodiment 1 in that: the said extruder screw mechanism 5 is provided with three, between the first channel 311 and second channel 312 there is a third channel 314, the first channel 311; the second channel 312 and the third channel 314 of molten plastic converge into the main channel. This embodiment can provide the production of three-color symphony caps. The upcoming three extrusion screw mechanism 5 are loaded with particles of three different colors, and to melt extruded, eventually forms molten blanks of three different colors. Put these three blanks respectively into the first channel 311, the second channel 312 and the third channel 314, they can merge into a three-color preform in the main channel 313, and then convey into the spray nozzle 33; the blank is scraped into segments by the rotating scraper 422 and convey into the female die 28 to press, then a three-colors symphony cap is done.

Obviously, upon reading and understanding these embodiments, those skilled who are in the art can also increase the number of extruder screw mechanism 5 to produce various colorful symphony cap according to their needs. The other part of this embodiment is the same as embodiment 1, so it is not repeated because of the limitation of length.

Finally, it should be noted that the above embodiments are just describing the present as examples, but those skilled who are in the art will understand that certain changes may be made into the constructions set forth without departing from the scope of the invention, which is defined by the appended claims.

## Claims

1. A cap press molding equipment, comprising a machine base (1), the machine base (1) is provided with a pressing rotating device (2), a feeding device (3), a rotary scraper device (4), and at least two extrusion screw mechanisms (5), for extruding different colors of molten plastic extrusion to the feeding device (3), the rotary scraper device (4) being arranged for scraping the extruded molten plastic of the feeding device (3), and then feeding it to the pressing rotating device (2) to press, and the machine base (1) is also provided with an unloading mechanism (6) which is to discharge the molded article, the cap press molding equipment being **characterized in that** the feeding device (3) comprises a confluence passage (31) to accept the molten plastics from the extrusion screws and a supply passage (32) communicating with the confluence passage (31), the confluent passage (31) including a main channel (313), a first channel (311) and a second channel (312) which are independently receiving the molten plastics of the extrusion screw mechanisms (5), the first channel (311) and second channel (312) being V shaped distribution, the first channel (311) and the second channel (312) being merged into the main channel (313), and the main channel (313) communicating with the supply channel (32), the output of the supply passage (32) being provided with a spray nozzle (33), further **characterized in that** the press rotating device (2) comprises a turntable base (21), a drive shaft (22) which is disposed on the turntable base (21), the drive shaft (22) being provided with the upper turntable (23) and lower turntable (24), the upper turntable (23) being provided with a plurality of first telescoping mechanism (25), the first telescoping mechanism (25) being provided with a male die (29), the lower turntable (24) being provided with a plurality of the second telescoping mechanism (27) which is corresponding to the first telescoping mechanism (25), the second telescoping mechanism (27) being provided with a female die (28) and the turntable being also provided with a servo motor which is connecting with the drive shaft (22) .

2. A cap press molding equipment according to claim 1, **characterized in that** the male die (29) comprises a mold 261, the mold is fitted with a movable up and down block (262), the block moves up and down driving by the first telescopic mechanism (25).

3. A cap press molding equipment according to claim 1, **characterized in that** the extrusion screw mechanism (5) includes a cartridge (51), a hopper (52) which feeds material to the cartridge (51), and a screw (53) which is set within the cartridge (51), a gear box (54) is arranged in one end of the cartridge 51, and this gear box (54) is used to drive the screw (53), the gear box (54) being connected to a second servo motor (5), the cartridge (51) being emitted from the other end side.

4. A cap press molding equipment according to claim 1, **characterized in that** the said extruder screw mechanism (5) is provided with three channels, the said extruder screw mechanism (5) comprising a third channel (314) between the first channel (311) and second channel (312) and the molten plastics of the first channel (311), the second channel (312) and the third channel (314) being convergent into the main channel (313).

5. A cap press molding equipment according to claim 1, **characterized in that** the rotating scraper means (4) comprises a first turntable (41) and several blade means (42) which are set on the turntable (41), and a third servo motor (43) to drive the first turntable (41).

6. A cap press molding equipment according to claim 1, **characterized in that** the unloading mechanism (6) includes a curved channel (61), a concave-convex wheel (62) that extending into the curved channel (61), and a drive mechanism (63) for driving concave-convex wheel (62), the edges of the curved channel (61) being provided with a stop bar (64) and the output of the stop bar (64) being provided with a belt.

7. A cap press molding equipment according to claims 1-6, **characterized in that** the rotating scraper device (4) is provided with a first pulley (44), the unloading mechanism (6) is provided with a second pulley (65) and the first pulley (44) and the second pulley (65) being drivingly connected.

8. Use of a cap press molding equipment for producing bottle caps with a distribution of different colors, wherein the cap press molding equipment comprises a machine base (1), the machine base (1) is provided with a pressing rotating device (2), a feeding device (3), a rotary scraper device (4), and at least two extrusion screw mechanisms (5), for extruding different colors of molten plastic extrusion to the feeding device (3), the rotary scraper device (4) being arranged for scraping the extruded molten plastic of the feeding device (3), and then feeding it to the pressing rotating device (2) to press, and the machine base (1) is also provided with an unloading mechanism (6) which is to discharge the molded article, the cap press molding equipment being **characterized in that** the feeding device (3) comprises a confluence passage (31) to accept the molten plastics from the extrusion screws and a supply passage (32) communicating with the confluence passage (31), the confluent passage (31) including a main channel (313), a first channel (311) and a second channel (312) which are independently receiving the molten plastics of the extrusion screw mechanisms (5), the first channel (311) and second channel (312) being V shaped distribution, the first channel (311) and the second channel (312) being merged into the main channel (313), and the main channel (313) communicating with the supply channel (32), the output of the supply passage (32) being provided with a spray nozzle (33)..

9. Use of a cap press molding equipment according to claim 8, **characterized in that** the press rotating device (2) comprises a turntable base (21), a drive shaft (22) which is disposed on the turntable base (21), the drive shaft (22) being provided with the upper turntable (23) and lower turntable (24), the upper turntable (23) being provided with a plurality of first telescoping mechanism (25), the first telescoping mechanism (25) being provided with a male die (29), the lower turntable (24) being provided with a plurality of the second telescoping mechanism (27) which is corresponding to the first telescoping mechanism (25), the second telescoping mechanism (27)being provided with a female die (28) and the turntable being also provided with a servo motor which is connecting with the drive shaft (22) .

10. Use of a cap press molding equipment according to claim 9, **characterized in that** the male die (29) comprises a mold 261, the mold is fitted with a movable up and down block (262), the block moves up and down driving by the first telescopic mechanism (25).

11. Use of a cap press molding equipment according to claim 10, **characterized in that** the extrusion screw mechanism (5) includes a cartridge (51), a hopper (52) which feeds material to the cartridge (51), and a screw (53) which is set within the cartridge (51), a gear box (54) is arranged in one end of the cartridge 51, and this gear box (54) is used to drive the screw (53), the gear box (54) being connected to a second servo motor (5), the cartridge (51) being emitted from the other end side.

12. Use of a cap press molding equipment according to claim 8, **characterized in that** the said extruder screw mechanism (5) is provided with three channels, the said extruder screw mechanism (5) comprising a third channel (314) between the first channel (311) and second channel (312) and the molten plastics of the first channel (311), the second channel (312) and the third channel (314) being convergent into the main channel (313).

13. Use of a cap press molding equipment according to claim 8, **characterized in that** the rotating scraper means (4) comprises a first turntable (41) and several blade means (42) which are set on the turntable (41), and a third servo motor (43) to drive the first turntable (41).

14. Use of a cap press molding equipment according to claim 8, **characterized in that** the unloading mechanism (6) includes a curved channel (61), a concave-convex wheel (62) that extending into the curved channel (61), and a drive mechanism (63) for driving concave-convex wheel (62), the edges of the curved channel (61) being provided with a stop bar (64) and the output of the stop bar (64) being provided with a belt.

15. Use of a cap press molding equipment according to claims 8-14, **characterized in that** the rotating scraper device (4) is provided with a first pulley (44), the unloading mechanism (6) is provided with a second pulley (65) and the first pulley (44) and the second pulley (65) being drivingly connected.

## Patentansprüche

1. Ausrüstung zum Pressformen von Verschlusskappen, umfassend eine Maschinenbasis (1), die Maschinenbasis (1) ist mit einer Press-Drehvorrichtung (2), einer Zuführvorrichtung (3), einer Rotations-Abstreifvorrichtung (4) und wenigstens zwei Schneckenpressen-Mechanismen (5) bereitgestellt zum Extrudieren von unterschiedlichen Farben von geschmolzener Plastikextrusion zur Zuführvorrichtung (3), wobei die Rotations-Abstreifvorrichtung (4) zum Abstreifen des extrudierten, geschmolzenen Plastiks der Zuführvorrichtung (3) und dann zu dessen Zuführen in die Press-Drehvorrichtung (2) zum Pressen angeordnet ist und die Maschinenbasis (1) ebenfalls mit einem Entladungsmechanismus (6) bereitgestellt ist, der zum Entladen des geformten Artikels bestimmt ist, wobei die Ausrüstung zum Pressformen von Verschlusskappen **dadurch gekennzeichnet ist, dass** die Zuführvorrichtung (3) einen Zusammenlaufdurchgang (31) umfasst, um das geschmolzene Plastik von den Schneckenpressen und einen Zuführdurchgang (32) aufzunehmen, der mit dem Zusammenlaufdurchgang (31) in Verbindung steht, wobei der Zusammenlaufdurchgang (31) einen Hauptkanal (313), einen ersten Kanal (311) und einen zweiten Kanal (312) enthält, die unabhängig voneinander das geschmolzene Plastik von dem Schneckenpressen-Mechanismus (5) empfängt, wobei der erste Kanal (311) und der zweite Kanal (312) eine V-förmige Verteilung aufweisen, wobei der erste Kanal (311) und der zweite Kanal (312) in den Hauptkanal (313) zusammengefügt sind und der Hauptkanal (313) mit dem Zuführkanal (32) kommuniziert, wobei der Ausgang des Zuführdurchgangs (32) mit einer Sprühdüse (33) bereitgestellt ist, weiterhin **dadurch gekennzeichnet, dass** die Press-Drehvorrichtung (2) eine Drehscheibenbasis (21), eine Antriebswelle (22), die auf der Drehscheibenbasis (21) angeordnet ist, umfasst, wobei die Antriebswelle (22) mit der oberen Drehscheibe (23) und der unteren Drehscheibe (24) bereitgestellt ist, wobei die obere Drehscheibe (23) mit einer Vielzahl von ersten Teleskopmechanismen (25) bereitgestellt ist, wobei der Teleskopmechanismus (25) mit einer positiven Form (29) bereitgestellt ist, wobei die untere Drehscheibe (24) mit einer Vielzahl von zweiten Teleskopmechanismen (27) bereitgestellt ist, die dem ersten Teleskopmechanismus (25) entsprechen, wobei der zweite Teleskopmechanismus (27) mit einer negativen Form (28) bereitgestellt ist und die Drehscheibe ebenfalls mit einem Servomotor bereitgestellt ist, der sich an die Antriebswelle (22) anschließt.

2. Ausrüstung zum Pressformen von Verschlusskappen gemäß Anspruch 1, **dadurch gekennzeichnet, dass** die positive Form (29) eine Matrize 261 umfasst, wobei die Matrize mit einem beweglichen Aufwärts- und Abwärts-Block (262) eingepasst ist, der Block sich aufwärts und abwärts bewegt und dabei den ersten Teleskopmechanismus (25) antreibt.

3. Ausrüstung zum Pressformen von Verschlusskappen gemäß Anspruch 1, **dadurch gekennzeichnet, dass** der Schneckenpressen-Mechanismus (5) eine Kartusche (51), einen Trichter (52), der das Material in die Kartusche (51) zuführt, und eine Schnecke (53) enthält, die innerhalb der Kartusche (51) eingesetzt ist, ein Getriebe (54) an einem Ende der Kartusche 51 angeordnet ist und dieses Getriebe (54) zum Antreiben der Schnecke (53) verwendet ist, wobei das Getriebe (54) an einen zweiten Servomotor (5) angeschlossen ist, wobei die Kartusche (51) von der anderen Endseite ausgegeben ist.

4. Ausrüstung zum Pressformen von Verschlusskappen gemäß Anspruch 1, **dadurch gekennzeichnet, dass** der genannte Schneckenpressen-Mechanismus (5) mit drei Kanälen bereitgestellt ist, wobei der genannte Schneckenpressen-Mechanismus (5) einen dritten Kanal (314) zwischen dem ersten Kanal (311) und dem zweiten Kanal (312) und das geschmolzene Plastik des ersten Kanals (311) umfasst, wobei der zweite Kanal (312) und der dritte Kanal (314) in den Hauptkanal (313) zusammenlaufen.

5. Ausrüstung zum Pressformen von Verschlusskappen gemäß Anspruch 1, **dadurch gekennzeichnet, dass** das Rotations-Abstreifmittel (5) eine erste Drehscheibe (41) und mehrere Klingenmittel (42), die auf der Drehscheibe (41) eingesetzt sind, und einen dritten Servomotor (43) zum Antreiben der ersten Drehscheibe (41) umfasst.

6. Ausrüstung zum Pressformen von Verschlusskappen gemäß Anspruch 1, **dadurch gekennzeichnet, dass** der Entladungsmechanismus (6) einen gebogenen Kanal (61), ein konkaves-konvexes Rad (62), das sich in den gebogenen Kanal (61) erstreckt, und einen Antriebsmechanismus (63) zum Antreiben des konkaven-konvexen Rades (62) enthält, wobei die Umrandungen des gebogenen Kanals (61) mit einer Anschlagsleiste (64) bereitgestellt sind und der Ausgang der Anschlagsleiste (64) mit einem Gurt bereitgestellt ist.

7. Ausrüstung zum Pressformen von Verschlusskappen gemäß Anspruch 1 - 6, **dadurch gekennzeichnet, dass** die Rotations-Abstreifvorrichtung (4) mit einer ersten Scheibe (44) bereitgestellt ist, der Entladungsmechanimus (6) mit einer zweiten Scheibe (65) bereitgestellt ist und die erste Scheibe (44) und die zweite Scheibe (65) antreibend angeschlossen sind.

8. Verwendung einer Ausrüstung zum Pressformen von Verschlusskappen zum Herstellen von Flaschenverschlüssen mit einer Verteilung von unterschiedlichen Farben, wobei die Ausrüstung zum Pressformen von Verschlusskappen eine Maschinenbasis (1) umfasst, die Maschinenbasis (1) ist mit einer Press-Drehvorrichtung (2), einer Zuführvorrichtung (3), einer Rotations-Abstreifvorrichtung (4) und wenigstens zwei Schneckenpressen-Mechanismen (5) bereitgestellt zum Extrudieren von unterschiedlichen Farben von geschmolzener Plastikextrusion zur Zuführvorrichtung (3), wobei die Rotations-Abstreifvorrichtung (4) zum Abstreifen des extrudierten, geschmolzenen Plastiks der Zuführvorrichtung (3) und dann zu dessen Zuführen in die Press-Drehvorrichtung (2) zum Pressen angeordnet ist und die Maschinenbasis (1) ebenfalls mit einem Entladungsmechanismus (6) bereitgestellt ist, das zum Entladen des geformten Artikels bestimmt ist, wobei die Ausrüstung zum Pressformen von Verschlusskappen **dadurch gekennzeichnet ist, dass** die Zuführvorrichtung (3) einen Zusammenlaufdurchgang (31) umfasst, um das geschmolzene Plastik von den Schneckenpressen und einen Zuführdurchgang (32) aufzunehmen, der mit dem Zusammenlaufdurchgang (31) in Verbindung steht, wobei der Zusammenlaufdurchgang (31) einen Hauptkanal (313), einen ersten Kanal (311) und einen zweiten Kanal (312) enthält, die unabhängig voneinander das geschmolzene Plastik von dem Schneckenpressen-Mechanismus (5) empfangen, wobei der erste Kanal (311) und der zweite Kanal (312) eine V-förmige Verteilung aufweisen, wobei der erste Kanal (311) und der zweite Kanal (312) in den Hauptkanal (313) zusammengefügt sind und der Hauptkanal (313) mit dem Zuführkanal (32) kommuniziert, wobei der Ausgang des Zuführdurchgangs (32) mit einer Sprühdüse (33) bereitgestellt ist.

9. Verwendung einer Ausrüstung zum Pressformen von Verschlusskappen gemäß Anspruch 8, **dadurch gekennzeichnet, dass** die Press-Drehvorrichtung (2) eine Drehscheibenbasis (21), eine Antriebswelle (22), die auf der Drehscheibenbasis (21) angeordnet ist, umfasst, wobei die Antriebswelle (22) mit der oberen Drehscheibe (23) und der unteren Drehscheibe (24) bereitgestellt ist, wobei die obere Drehscheibe (23) mit einer Vielzahl von ersten Teleskopmechanismen (25) bereitgestellt ist, wobei der erste Teleskopmechanismus (25) mit einer positiven Form (29) bereitgestellt ist, wobei die untere Drehscheibe (24) mit einer Vielzahl von zweiten Teleskopmechanismen (27) bereitgestellt ist, die dem ersten Teleskopmechanismus (25) entsprechen, wobei der zweite Teleskopmechanismus (27) mit einer negativen Form (28) bereitgestellt ist und die Drehscheibe ebenfalls mit einem Servomotor bereitgestellt ist, der sich an die Antriebswelle (22) anschließt.

10. Verwendung einer Ausrüstung zum Pressformen von Verschlusskappen gemäß Anspruch 9, **dadurch gekennzeichnet, dass** die positive Form (29) eine Matrize 261 umfasst, die Matrize ist mit einem beweglichen Aufwärts- und Abwärts-Block (262) eingepasst, der Block bewegt sich aufwärts und abwärts und treibt dabei den ersten Teleskopmechanismus (25) an.

11. Verwendung einer Ausrüstung zum Pressformen von Verschlusskappen gemäß Anspruch 10, **dadurch gekennzeichnet, dass** der Schneckenpressen-Mechanismus (5) eine Kartusche (51), einen Trichter (52), der das Material in die Kartusche (51) zuführt, und eine Schnecke (53) enthält, die innerhalb der Kartusche (51) eingesetzt ist, ein Getriebe (54) an einem Ende der Kartusche 51 angeordnet ist und dieses Getriebe (54) zum Antreiben der Schnecke (53) verwendet ist, wobei das Getriebe (54) zum Antreiben der Schnecke (53) verwendet ist, wobei das Getriebe (54) an einen zweiten Servomotor (5) angeschlossen ist, wobei die Kartusche (51) von der anderen Endseite ausgegeben ist.

12. Verwendung einer Ausrüstung zum Pressformen von Verschlusskappen gemäß Anspruch 8, **dadurch gekennzeichnet, dass** der genannte Schneckenpressen-Mechanismus (5) mit drei Kanälen bereitgestellt ist, wobei der genannte Schneckenpressen-Mechanismus (5) einen dritten Kanal (314) zwischen dem ersten Kanal (311) und dem zweiten Kanal (312) und das geschmolzene Plastik des ersten Kanals (311) umfasst, wobei der zweite Kanal (312) und der dritte Kanal ((314) in den Hauptkanal (313) zusammenfließen.

13. Verwendung einer Ausrüstung zum Pressformen von Verschlusskappen gemäß Anspruch 8, **dadurch gekennzeichnet, dass** das Rotations-Abstreifmittel (4) eine erste Drehscheibe (41) und mehrere Klingenmittel (42), die auf der Drehscheibe (41) eingesetzt sind, und einen dritten Servomotor (43) zum Antreiben der ersten Drehscheibe (41) umfasst.

14. Verwendung einer Ausrüstung zum Pressformen von Verschlusskappen gemäß Anspruch 8, **dadurch gekennzeichnet, dass** der Entladungsmechanismus (6) einen gebogenen Kanal (61), ein konkaves-konvexes Rad (62), das sich in dem gebogenen Kanal (61) erstreckt, und einen Antriebsmechanismus (63) zum Antreiben des konkaven-konvexen Rades (62) enthält, wobei die Umrandungen des gebogenen Kanals (61) mit einer Anschlagsleiste (64) bereitgestellt sind und der Ausgang der Anschlagsleiste (64) mit einem Gurt bereitgestellt ist.

15. Verwendung einer Ausrüstung zum Pressformen von Verschlusskappen gemäß Anspruch 8- 14, **dadurch gekennzeichnet, dass** die Rotations-Abstreifvorrichtung (4) mit einer ersten Scheibe (44) bereitgestellt ist, der Entladungsmechanismus (6) mit einer zweiten Scheibe (65) bereitgestellt ist und die erste Scheibe (44) und die zweite Scheibe (65) antreibend angeschlossen sind.

## Revendications

1. Equipement de moulage par pressage de bouchons, comprenant une base de machine (1), la base de machine (1) est pourvue d'un dispositif rotatif de pressage (2), d'un dispositif d'alimentation (3), d'un dispositif de raclage rotatif (4), et d'au moins deux mécanismes de vis d'extrusion (5), pour extruder différentes couleurs de plastique fondu vers le dispositif d'alimentation (3), le dispositif de raclage rotatif (4) étant agencé pour racler le plastique fondu extrudé du dispositif d'alimentation (3), puis l'amener au dispositif rotatif de pressage (2) pour le presser, et la base de la machine (1) est également munie d'un mécanisme de déchargement (6) qui est destiné à décharger l'article moulé, l'équipement de moulage par compression de bouchons étant **caractérisé en ce que** le dispositif d'alimentation (3) comprend un passage de confluence (31) pour accepter les matières plastiques fondues provenant des vis d'extrusion et un passage d'alimentation (32) communiquant avec le passage de confluence (31), le passage de confluence (31) comprenant un canal principal (313), un premier canal (311) et un second canal (312) qui reçoivent indépendamment les matières plastiques fondues des mécanismes de vis d'extrusion (5), le premier canal (311) et le second canal (312) étant une distribution en forme de V, le premier canal (311) et le second canal (312) étant fusionnés dans le canal principal (313), et le canal principal (313) communiquant avec le canal d'alimentation (32), la sortie du passage d'alimentation (32) étant pourvue d'une buse de pulvérisation (33), en outre
**caractérisé en ce que** le dispositif de rotation de presse (2) comprend une base de plateau tournant (21), l'arbre d'entraînement (22) qui est disposé sur la base de plateau tournant (21), l'arbre d'entraînement (22) étant pourvu du plateau tournant supérieur (23) et du plateau tournant inférieur (24), le plateau tournant supérieur (23) étant pourvu d'une pluralité de premiers mécanismes télescopiques (25), le premier mécanisme télescopique (25) étant pourvu d'une matrice mâle (29), le plateau tournant inférieur (24) étant pourvu d'une pluralité de seconds mécanismes télescopiques (27) qui correspondent au premier mécanisme télescopique (25), le second mécanisme télescopique (27) étant pourvu d'une matrice femelle (28) et le plateau tournant étant également pourvu d'un servomoteur qui est relié à l'arbre d'entraînement (22).

2. Equipement de moulage de presse à bouchon selon la revendication 1, **caractérisé en ce que** la matrice mâle (29) comprend un moule 261, le moule est équipé d'un bloc mobile vers le haut et vers le bas (262), le bloc se déplace vers le haut et vers le bas en étant entra né par le premier mécanisme télescopique (25).

3. Equipement de moulage de presse à bouchon selon la revendication 1, **caractérisé en ce que** le mécanisme de vis d'extrusion (5) comprend une cartouche (51), une trémie (52) qui alimente la cartouche (51) en matériau, et une vis (53) qui est placée à l'intérieur de la cartouche (51), une boite de vitesse (54) est disposée dans une extrémité de la cartouche (51), et cette boite de vitesse (54) est utilisée pour entraîner la vis (53), la boite de vitesse (54) étant connectée à un second servomoteur (5), la cartouche (51) étant émise depuis l'autre côté d'extrémité.

4. Equipement de moulage par compression de bouchons selon la revendication 1, **caractérisé en ce que** ledit mécanisme de vis d'extrusion (5) est pourvu de trois canaux, ledit mécanisme de vis d'extrusion (5) comprenant un troisième canal (314) entre le premier canal (311) et le deuxième canal (312) et les matières plastiques fondues du premier canal (311), du deuxième canal (312) et du troisième canal (314) convergeant dans le canal principal (313).

5. Equipement de moulage de presse à bouchon selon la revendication 1, **caractérisé en ce que** le moyen de raclage rotatif (4) comprend une première table tournante (41) et plusieurs moyens de lame (42) qui sont placés sur la table tournante (41), et un troisième servomoteur (43) pour entraîner la première table tournante (41).

6. Equipement de moulage de presse à bouchon selon la revendication 1, **caractérisé en ce que** le mécanisme de déchargement (6) comprend un canal incurvé (61), une roue concave-convexe (62) qui s'étend dans le canal incurvé (61), et un mécanisme de commande (63) pour commander la roue concave-convexe (62), les bords du canal incurvé (61) étant pourvus d'une barre d'arrêt (64) et la sortie de la barre d'arrêt (64) étant pourvue d'une courroie.

7. Equipement de moulage par pressage de bouchons selon les revendications 1-6, **caractérisé en ce que** le dispositif de raclage rotatif (4) est pourvu d'une première poulie (44), le mécanisme de déchargement (6) est pourvu d'une seconde poulie (65) et la première poulie (44) et la seconde poulie (65) étant reliées de manière motrice.

8. Utilisation d'un équipement de moulage par pression de bouchons pour produire des bouchons de bouteilles avec une distribution de différentes couleurs, dans laquelle l'équipement de moulage par pression de bouchons comprend une base de machine (1), la base de machine (1) est pourvue d'un dispositif rotatif de pression (2), d'un dispositif d'alimentation (3), d'un dispositif de raclage rotatif (4), et d'au moins deux mécanismes de vis d'extrusion (5), pour extruder différentes couleurs de plastique fondu vers le dispositif d'alimentation (3), le dispositif de raclage rotatif (4) étant agencé pour racler le plastique fondu extrudé du dispositif d'alimentation (3), puis l'amener au dispositif rotatif de pressage (2) pour le presser, et la base de la machine (1) est également munie d'un mécanisme de déchargement (6) qui est destiné à décharger l'article moulé, l'équipement de moulage par compression de bouchons étant **caractérisé en ce que** le dispositif d'alimentation (3) comprend un passage de confluence (31) pour accepter les matières plastiques fondues provenant des vis d'extrusion et un passage d'alimentation (32) communiquant avec le passage de confluence (31), le passage de confluence (31) comprenant un canal principal (313), un premier canal (311) et un second canal (312) qui reçoivent indépendamment les matières plastiques fondues des mécanismes de vis d'extrusion (5), le premier canal (311) et le second canal (312) étant une distribution en forme de V, le premier canal (311) et le second canal (312) étant fusionnés dans le canal principal (313), et le canal principal (313) communiquant avec le canal d'alimentation (32), la sortie du passage d'alimentation (32) étant pourvue d'une buse de pulvérisation (33).

9. Utilisation d'un équipement de moulage de presse à bouchon selon la revendication 8, **caractérisée en ce que** le dispositif de rotation de presse (2) comprend une base de plateau tournant (21), un arbre d'entrainement (22) qui est disposé sur la base de plateau tournant (21), l'arbre d'entrainement (22) étant muni d'un plateau tournant supérieur (23) et d'un plateau tournant inférieur (24), le plateau tournant supérieur (23) étant muni d'une pluralité de premiers mécanismes télescopiques (25), le premier mécanisme télescopique (25) étant pourvu d'une matrice mâle (29), le plateau tournant inférieur (24) étant pourvu d'une pluralité de seconds mécanismes télescopiques (27) qui correspondent au premier mécanisme télescopique (25), le second mécanisme télescopique (27) étant pourvu d'une matrice femelle (28) et le plateau tournant étant également pourvu d'un servomoteur qui est relié à l'arbre d'entraînement (22).

10. Utilisation d'un équipement de moulage de presse à bouchons selon la revendication 9, **caractérisée en ce que** la matrice mâle (29) comprend un moule 261, le moule est équipé d'un bloc mobile de montée et de descente (262), le bloc se déplace de haut en bas en étant entraîné par le premier mécanisme télescopique (25).

11. Utilisation d'un équipement de moulage de presse à bouchon selon la revendication 10, **caractérisée en ce que** le mécanisme de vis d'extrusion (5) comprend une cartouche (51), une trémie (52) qui alimente la cartouche (51) en matériau, et une vis (53) qui est placée à l'intérieur de la cartouche (51), une boite d'engrenages (54) est agencée dans une extrémité de la cartouche (51), et cette boite d'engrenages (54) est utilisée pour entraîner la vis (53), la boite d'engrenages (54) étant connectée à un second servomoteur (5), la cartouche (51) étant émise depuis l'autre côté d'extrémité.

12. Utilisation d'un équipement de moulage par compression de bouchons selon la revendication 8, **caractérisée en ce que** ledit mécanisme de vis d'extrusion (5) est muni de trois canaux, ledit mécanisme de vis d'extrusion (5) comprenant un troisième canal (314) entre le premier canal (311) et le deuxième canal (312) et les matières plastiques fondues du premier canal (311), du deuxième canal (312) et du troisième canal (314) convergeant dans le canal principal (313).

13. Utilisation d'un équipement de moulage de presse à bouchon selon la revendication 8, **caractérisée en ce que** le moyen de raclage rotatif (4) comprend un premier plateau tournant (41) et plusieurs moyens de lame (42) qui sont placés sur le plateau tournant (41), et un troisième servomoteur (43) pour entraîner le premier plateau tournant (41).

14. Utilisation d'un équipement de moulage de presse à bouchon selon la revendication 8, **caractérisée en ce que** le mécanisme de déchargement (6) comprend un canal incurvé (61), une roue concave-convexe (62) qui s'étend dans le canal incurvé (61), et un mécanisme d'entraînement (63) pour entraîner la roue concave-convexe (62), les bords du canal incurvé (61) étant pourvus d'une barre d'arrêt (64) et la sortie de la barre d'arrêt (64) étant pourvue d'une courroie.

15. Utilisation d'un équipement de moulage par presse à bouchons selon les revendications 8 à 14, **caractérisée en ce que** le dispositif de raclage rotatif (4) est pourvu d'une première poulie (44), le mécanisme de déchargement (6) est pourvu d'une seconde poulie (65) et la première poulie (44) et la seconde poulie (65) étant reliées de manière motrice.
